(19) Europäisches Patentamt
European Patent Office
Office européen des brevets

(11) **EP 1 384 898 B1**

(12) **EUROPEAN PATENT SPECIFICATION**

(45) Date of publication and mention
of the grant of the patent:
**27.07.2005 Bulletin 2005/30**

(51) Int Cl.⁷: **F04F 5/46**, C02F 1/44,
B01D 61/02, B01D 17/02

(21) Application number: **03022358.0**

(22) Date of filing: **31.08.1999**

(54) **Separating arrangement for treatment of fluids**

Trennvorrichtung zur Behandlung von Fluiden

Dispositif de séparation pour le traitement de fluides

(84) Designated Contracting States:
**AT BE CH CY DE DK ES FI FR GB GR IE IT LI LU MC NL PT SE**

(43) Date of publication of application:
**28.01.2004 Bulletin 2004/05**

(62) Document number(s) of the earlier application(s) in accordance with Art. 76 EPC:
**99939305.1 / 1 208 304**

(73) Proprietor: **DCT Double-Cone Technology AG**
**3602 Thun (CH)**

(72) Inventors:
• **Stark, John Herman**
**3665 Wattenwyl (CH)**

• **Wagenbach, Hansjörg**
**3502 Biel (CH)**
• **Straub, Paul Werner**
**3202 Frauenkappelen (CH)**

(74) Representative:
**AMMANN PATENTANWAELTE AG BERN**
**Schwarztorstrasse 31**
**3001 Bern (CH)**

(56) References cited:
| | |
|---|---|
| **EP-A- 0 599 281** | **WO-A-87/01770** |
| **WO-A-98/58175** | **WO-A-98/58176** |
| **WO-A-99/08003** | **CH-A- 689 722** |
| **US-A- 4 190 537** | **US-A- 4 625 744** |

**Description**

The present invention relates to a separating arrangement for the treatment of fluids according the preamble of claim 1, namely separating admixtures.

Double-cone devices are described in the WO-A-87/01770 whose content is incorporated in this description by reference. The double-cone device, amongst other things, allows one to upgrade the available pumping pressure of a modest conventional pump. When incorporated in a compressor loop, such as proposed in the aforementioned patent, numerous novel possibilities become evident.

The double-cone device essentially consists of two cones which are connected by their ends of small diameter. At the interface, i. e. interspersed between entry cone and exit cone, an orifice is provided. In the region of the orifice, the double-cone device, if penetrated by a fluid, builds up a surprisingly low pressure which allows another fluid to be drawn into the device with high efficiency. When included in a closed loop with a pump, the pressure in this loop can be increased in that the double-cone unit sucks in fluid until an equilibrium is attained. The term fluid refers to both liquids and gases.

The double-cone device is characterized by the angles $\theta_1$ and $\theta_2$ of the conicity of the entry resp. the exit cone:

$$F= (1 + \sin \theta_1)^2 * \sin^2 \theta_2$$

The quality function F should always be less than 0.11. The ranges are detailed hereinafter:

| F | Quality |
|---|---|
| <0.0035: | best |
| 0.0035 - 0.0155 | very good |
| 0.0155 - 0.0250 | good |
| 0.0250 - 0.0500 | satisfying |
| 0.0500 - 0.1100 | still sufficient |
| > 0.1100 | poor |

One application where fluids must be pressurized, are reverse osmosis plants where admixtures are separated from a fluid, e. g. salt from water. However, other separation devices than reverse osmosis units, like cyclones, require a pressurized fluid as the working medium, too.

Generally, these separation units or devices need a certain throughput of the working medium to work properly over long periods. For instance, reverse osmosis units have to be "flushed" by the working medium.

The known separation arrangements, particularly those comprising reverse osmosis units, secure the required fluid throughput by additional measures like overdimensioned pumps, leading to a reduced overall performance.

Hence, it is an object of the present invention to propose a separating arrangement for fluids having constituents in admixture with improved performance.

Such a separating arrangement is defined in claim 1. The further claims define preferred embodiments and uses of the arrangement.

Accordingly, a separation unit needing a pressure difference, e.g. a reverse osmosis unit, or a pressurized working fluid for its function or for improved performance, is penetrated by a pressurised fluid. The exit fluid leaving the separation unit in which the concentration of constituents to be separated is increased, is supplied to another separation unit, where a mass exchange with e.g. fresh liquid occurs. In this separation unit, due to the content of undesired constituents in both fluids, the fresh fluid is diluted by purified fluid extracted from the pressurized exit fluid. Thereby, the overall performance of the separation process is increased and a high level of fluid throughput is maintained.

The invention will be described referring to Figures:

Fig. 1    Schematic illustration of a known double-cone device;

Fig. 2    Schematic illustration of a double-cone device according to the invention in a longitudinal section;

Fig. 3    Scheme of a known use of a double-cone device in a closed loop;

Fig. 4    Scheme of a first closed-loop system using a double-cone device;

Fig. 5    Scheme of a second closed-loop system using a double-cone device;

Fig. 6    Scheme of a third closed-loop system using a double-cone device;

Fig. 7    Scheme of a fourth closed-loop system using a double-cone device;

Fig. 8    Scheme of a first separating arrangement; and

Fig. 9    Scheme of a second separating arrangement

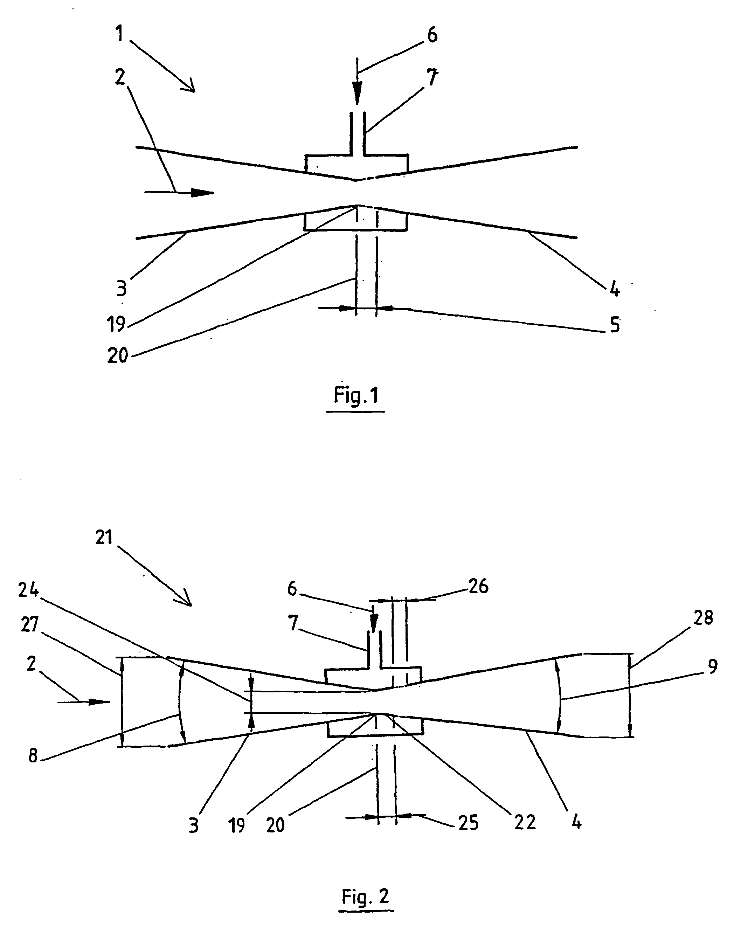

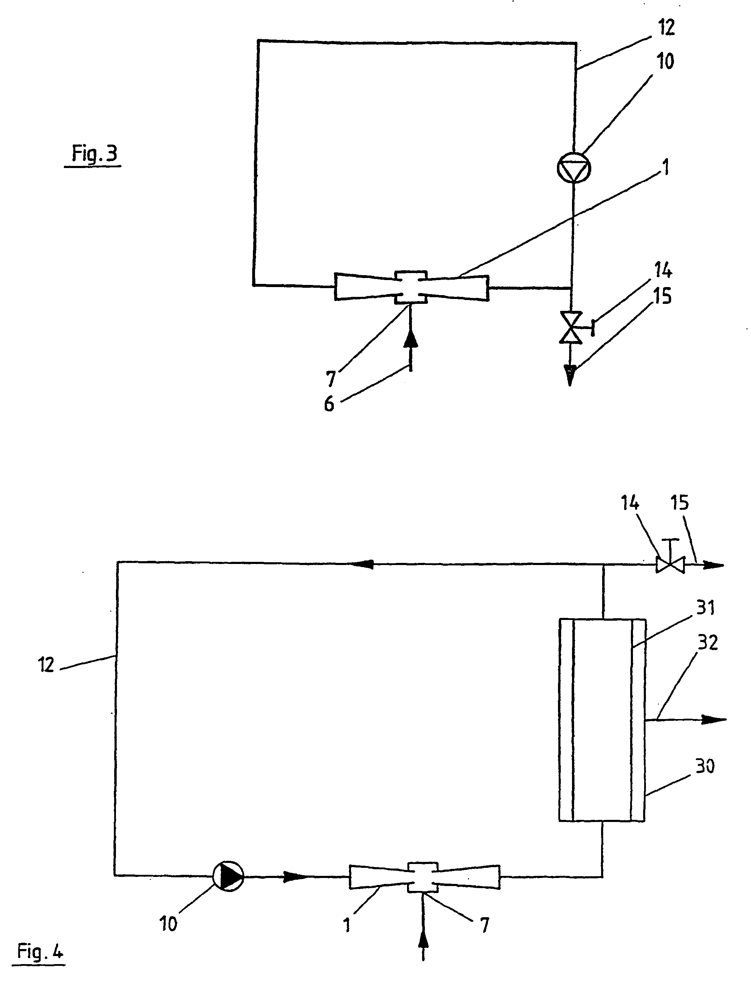

Before defining the source of the problems, it is necessary to describe the functioning of the double-cone device and the basic compressor loop. The original patented double-cone device and the basic compressor loop are presented in Figures 1 and 3, respectively. These schematics will be used to describe their mode of functioning.

Referring to Fig. 1, the double-cone device 1 is fed with a feed flow 2 that enters the entry cone 3 and discharges into the exit cone 4. As the feed flow crosses the gap 5, material 6 may be drawn into the inlet 7 and, consequently, into the exit cone 4. The inlet flow rate is dependent on a number of parameters including geometrical ones as well as the feed flow rate and the external pressures at the inlet and downstream of the exit cone.

The conicity $\theta_1$ is the angle 8 between the walls of the entry cone 3, the conicity $\theta_2$ is the angle 9 of the walls of the exit cone 4.

The basic compressor loop, which we will refer to as a double-cone technology (DCT) pump, is presented in Fig. 3. The pump 10 circulates liquid through the double-cone device 1 and round the main loop 12. Material enters the double-cone inlet 7 and causes a pressure rise within the main loop 12. This system pressure P is adjusted via the regulating valve 14 which controls the outlet flow 15 from the main loop 12.

The first problem stems from the geometry of the double-cone device 1. On progressively increasing the amount of material drawn into the device, a level is reached where the double-cone starts to destroy itself. The destruction takes the form of material torn out of the wall downstream of the entry to the exit cone. This damage renders the double-cone device inefficient and excessively noisy.

The basic double-cone device as presented in the WO-A-87/01770 is reproduced in Fig. 1. It is seen that the orifice 19 lies on the inlet plane 20. By moving this inlet plane 20 downstream of the orifice 19, as displayed in Fig. 2, and respecting the double-cone geometry, the wear problem is virtually eliminated. Experimentally, it appears that the inlet material 6 drawn into the double-cone device 21 is not subjected to such an extreme stress and so the wall material is better able to resist. In order to achieve the same suction pressure as the original double-cone device more feed flow rate is required. However, the short diffuser 22 attached to the entry cone 3 of Fig. 2 also results in a lower pressure-drop across the complete double-cone device 21. Thus, for a given pressure-drop more feed flow can be achieved with the modified double-cone device 21. The net result is that a similar suction performance to that of the known double-cone device 1 may be obtained without the attendant cone damage. In fact, a lower pressure-drop is observed when comparing equivalent suctions.

Referring to Fig. 2, the orifice diameter 24 is represented by d and the small diffuser length 25 by L. The ratio of L to d is critical for the performance of the modified double-cone device 21. Values of L/d greater than 0.1 display improved life expectancy and overall performance. As the ratio of L/d is increased, the overall pressure-drop across the modified double-cone device 21 decreases. In contrast, the maximum compressor pressure that can be achieved for a given feed flow rate decreases. The optimal trade-off occurs close to the value of L/d which yields just adequate compressor pressure for the available feed flow rate.

Other parameters for a particularly advantageous layout of the double-cone device are:

Ratio h/d of gap width h 26 to orifice diameter d 24: $0 < h/d < 3$, preferably $0.5 < h/d < 2$;

ratio $D_{in}/d$ of entry diameter $D_{in}$ 27 to orifice diameter d: $2 < D_{in}/d < \infty$, preferably $5 < D_{in}/d < 20$;

ratio $D_{out}/d$ of exit diameter $D_{out}$ 28 to orifice diameter d: $2 < D_{out}/d < \infty$, preferably $5 < D_{out}/d < 20$;

conicity $\theta_1$ 8 of entry cone: $0 < \theta_1 < 10°$ (degree), preferably $\theta_1 < 8°$ and even more preferably $\theta_1 < 6°$; and

conicity $\theta_2$ 9 of exit cone: $\theta_2 \leq \theta_1$.

A direct comparison between the performances of the basic double-cone device 1 of Fig. 1 and the improved double-cone device 21 of Fig. 2 may be derived from the following results:

**Working conditions:**

| | |
|---|---|
| Feed flow rate | 8 m³/h |
| Inlet flow rate | 1 m³/h |
| System pressure P | 35 bar |

**Observation:**

Fig. 1 device:    Serious damage after only 20 minutes running time
Fig. 2 device:    No damage apparent after 40 hours running time

In addition to the increased lifetime, the operating noise can be reduced by this measure.

As a consequence of the significantly improved characteristics of the double-cone device according to the invention, industrial applications are conceivable where high throughput at high pressure and a reasonable lifetime is necessary or at least advantageous. One such application is the purification of water containing unwanted components, particularly the desalination of sea-water by reverse osmosis.

In a first approach according to Fig. 4, the reverse osmosis filter 30 may be directly inserted in the main loop 12. The purified fluid, e. g. desalinated sea-water, is recovered at the exit line 32 of the osmosis unit 30. Concentrated fluid leaves the main loop 12 via line 15 and valve 14. In this configuration, the solute concentration builds up progressively to a high stable level within the actual compressor loop. Consequently, the separation membranes 31 are required to reject a much higher solute concentration than the one which existed originally in the untreated inlet supply. This results in an impaired solvent yield. Though, this layout of a purification system by reverse osmosis remains applicable, particularly under less demanding conditions, e. g. low concentrations of the matter to be separated.

The build-up of concentration within the compressor loop can be overcome by removing the separation membranes from the loop. This solution to the problem can introduce other difficulties because of the reduced membrane flushing.

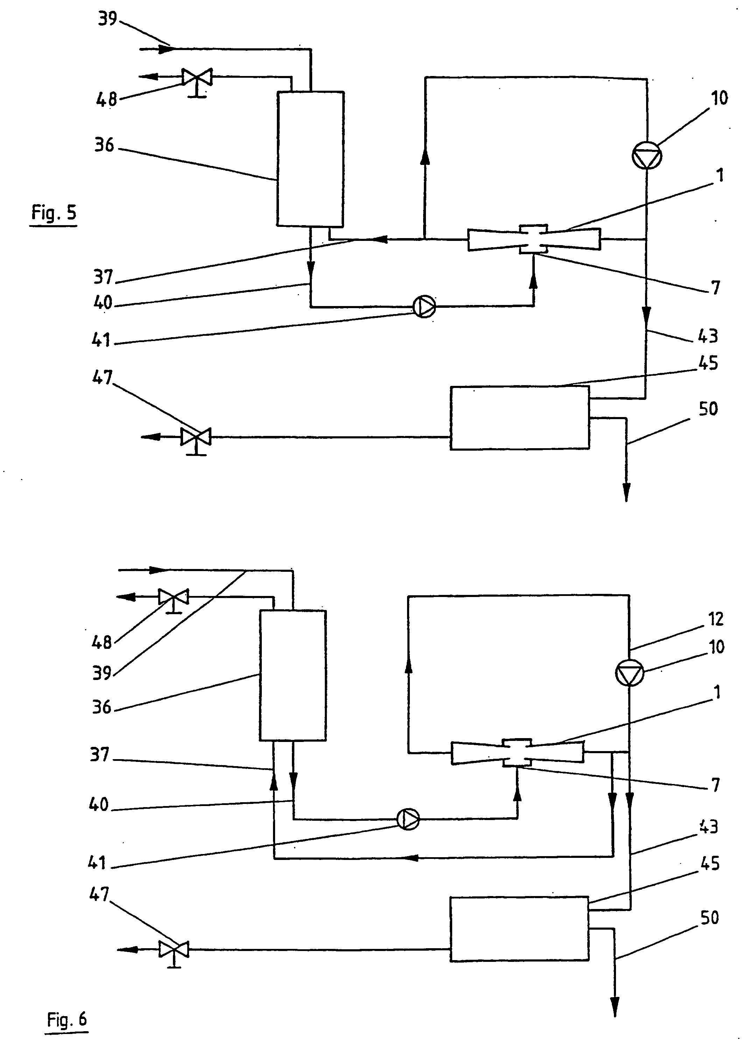

Typically, when functioning at high pressures, one may assume that only some 10 % of the main feed flow rate is available for supplying the separation membranes when placed external to the compressor loop. In Figures 5 and 6 of this patent application, a rearranged system is proposed that completely overcomes all these problems.

The schemes proposed in Figures 5 and 6 function according to the new principle of concentration reduction prior to entry into the DCT Pump. Referring to Fig. 5, the membrane of the entry osmosis unit 36 is supplied through line 37 on the higher pressure side of its membrane from the DCT pump downstream of the double-cone device 1. Liquid crosses the membrane and enters the supply stream 39, so the supply liquid in conduit 40 after the entry osmosis unit 36 is diluted. An optional feed pump 41 helps pressurise this stream at the inlet 7 to the double-cone 1. This additional pressure greatly enhances the performance of the DCT pump 10, both with respect to the system pressure and inlet flow capacity that can be achieved. The diluted supply stream leaves the DCT Pump on the high pressure side of the circulating pump 10 through conduit 43 and enters the exit osmosis unit 45. The system pressure is regulated by means of the two flow regulating valves 47 and 48 where the concentrate leaves the installation. The purified liquid is collected at the solvent outlet 50.

For many low, medium and high pressure membranes that are currently available, pressure cannot be applied to the lower pressure side of the membrane for fear of rupturing the unit. Typically, less than 0.5 bar is specified for most spiral wound reverse osmosis and nanofilter units. Thus the optional pump 41 cannot be placed before the entry osmosis unit 36 in Fig. 5.

The advantage of this optional pump 41 is evident from the following results:

| | |
|---|---|
| Hydraulic power of the optional pump relative to that of the circulating pump | 9% |
| Net gain in relative hydraulic power at outlet from DCT Pump | 50% |

The logic behind the concentration reduction is that the incoming supply stream 39 is sufficiently concentrated to permit an exchange through a membrane by reverse osmosis between itself and a highly concentrated stream feeding the higher pressure side of the membrane. For example, 35 bar of pressure should counterbalance the inherent osmotic pressure across a semi-permeable membrane that is associated with an NaCl salt concentration gradient of at least 35 g/l (grams per litre). This compensation should be sufficient whether the membrane separates sea water from fresh water or sea water from a 70 g/l brine solution. In practise it has been observed, for a specific choice of membrane in the osmosis unit 36, that sea water reaches the DCT Pump with concentrations as low as 13 g/l.

The main difference between Figures 5 and 6 is that in Fig. 6, the conduit 52 which supplies the volume of liquid to the higher pressure side of the membrane in osmosis unit 36, branches off upstream of the pump 10 and upstream of the double-cone device 1 so that the volume of liquid supplied to the entry osmosis unit 36 does not have to pass through the double-cone 1. As a result, the circulating pump 10 for the Fig. 6 installation will use less power than in the Fig. 5 installation. However, for certain cases the highest pressure possible is required for each set of membranes, which could favour the choice of the Fig. 5 installation.

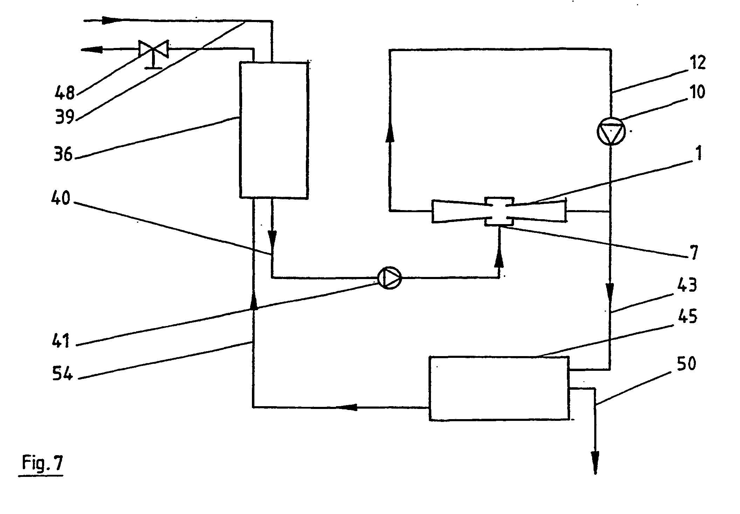

The installation shown in Fig. 7 specifically solves the problem associated with the membrane flushing requirement. The concentrate outlet of the exit osmosis unit 45 is connected to the entry osmosis unit 36 by the line 54. By so combining the concentrate lines from each block of membranes, the maximum volume of flushing liquid may be conserved. In addition, the membrane of osmosis unit 45 is able to function under more favourable conditions than those of the membrane of entry osmosis unit 36.

The separation of solids and/or dangerous contaminants from liquid carriers can present serious problems. If either reach the classic pumping device they can cause instant failure or provoke an explosion. Certainly, very expensive pumping equipment does exist for some explosive materials, but mostly one tries to side-track the problem.

For instance, the removal of crude oil from the sea has become a periodic nightmare in recent years. This contamination can be composed of light ends, which at best are highly inflammable, and heavy fractions which are of a tar-like consistency. In most instances this contamination can be traced to shipping leaks and often involves very large quantities spread over huge surface areas of sea. The removal of this pollutant poses a major problem even with today's level of technology.

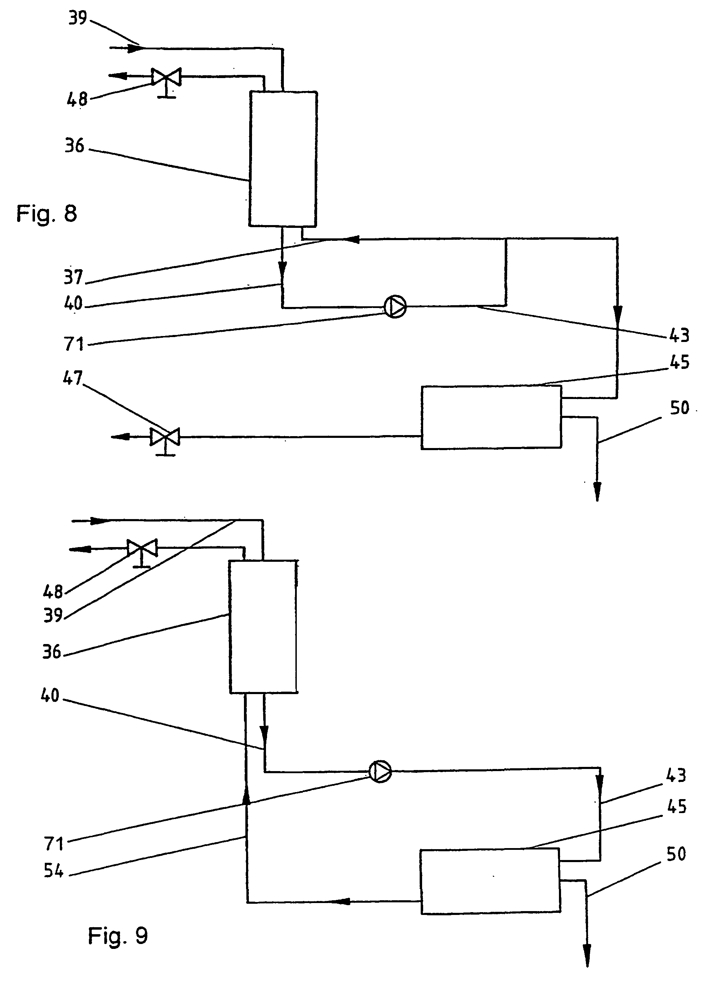

Most ports are contaminated with waste oil and detritus. This material is progressively polluting the coastal fishing and pleasure areas creating a toxic sea environment. Any proposed clean-up will involve the handling of hitherto unimagined volumes of water. With the double-cone modifications proposed in this patent application, a scheme such as that outlined in Fig. 8 should offer the necessary potential to make a serious contribution to this problem.

In applications, where the peculiar advantages of the DCT pump are not needed, any other suited pump may be used.

Particularly, instead of the closed loop of conduit 12 with circulating pump 10 and double-cone device 1, a conventional pump or pump arrangement for creating the working pressure in the separation units 45, 36; 57 may be deployed.

Fig. 9 is a scheme of such a separating arrangement corresponding to the arrangements shown in Figs. 6 and 7, and Fig. 10 is a scheme corresponding to the one of Fig. 8. In Figs. 9, 10, the feed pump 41 and the double-cone pump loop 1, 10, 12 are replaced by pump 71. The pump 71 may be a single pump providing the required feed flow and pressure difference. Of course, pump 71 may be constituted by a dual stage or multi-stage arrangement, e. g. of feed pumps and pressurising pumps. In this latter case, regarding Fig. 9, it is conceivable that the conduit 37 branches off at an intermediate point within this pump arrangement.

The invention has been described by means of illustrative examples. However, the scope of protection relating to this invention is not restricted to the examples set forth but determined by the claims. The one skilled in the art will be able to see numerous variants derived from the basic concept. Some such modifications are presented below:

- The addition of a second variable gap, whose inlet plane coincides with the orifice, introduces the possibility of temporarily increasing the available suction.
- The exit cone downstream of the gap 5 can be sectioned so as to include several secondary gaps. In preference, each of these gaps is equipped with the possibility of partial or total closure. The secondary gaps can be chosen with various heights and/or distances from the orifice.
  The variable gaps, covering the range of fully open to closed, can be realised as follows:

  - A section can be removed from the exit cone and a shutter ring used to vary or completely close the gap.
  - A cut made through the exit cone and one part moved relative to the other.
  - One or several holes can be introduced in the wall of the exit cone with the possibility of varying the opening by means of either a shutter, shutter rings or valves.

- The double cone modifications proposed above can be introduced into the applications and installations depicted in the main text.
- The installations for implementing the new application can comprise more than one double-cone device, separation unit or pump. In particular, the double-cones can be arranged in parallel or in series. The parallel arrangements sometimes require individual flow controlling devices for each branch.

## Claims

**1.** Separating arrangement comprising a pressurising pump (1, 10, 12; 71) and separation units for separating a fluid from components contained in admixture, the separation units necessitating a pressure difference for the separation process of showing improved performance with increased pressure of the fluid, **characterized in that** an input (40) of the pump is connected to a first separation unit (36),

**that** an output (43) of the pump is connected to a second separation unit (45) for supplying it with pressurised fluid, and

**that** the first separation unit is connected to an outlet of the second separation unit, the outlet delivering fluid enriched with admixed component, or to an output of pump, in order to supply the first separation unit with pressurised fluid of original or elevated components concentration and, thereby, to dilute the fluid conveyed through the first separation unit to the pump with respect to the admixed components.

2. A separating arrangement according to claim 1, **characterized in that** the pump is a fluidic loop comprising a loop conduit (12), a circulating pump (10) and a double-cone device (1) in a loop arrangement, the inlet of the pump being constituted by the inlet (7) of the double-cone device, and the output (43) of the pump being constituted essentially by a conduit branched off the loop conduit.

3. A separating arrangement according to claim 2, **characterized in that** a pump (40) is connected with the inlet (7) of the double-cone device in order to improve the supply of fluid to the double-cone device.

4. Separating arrangement according to one of claims 1 to 3, **characterized in that** the first separation unit (36) allows a mass exchange between two fluids, the separation unit being connected to a pump outlet (14, 15; 37, 43) and an inlet (40) of the pump (1, 10, 12; 71), so that a mass-exchange between the fluid exiting the pump and the fluid entering it through the first separation unit (36) occurs so that the concentration of matter to be separated from the fluid is reduced in the entering fluid.

5. Separating arrangement according to one of claims 1 to 4, **characterized in that** the second separation unit (45) is capable of separating matter from the fluid, particularly by osmosis, reverse osmosis, filtration, cyclone effect, or chromatography, in order to recover purified fluid and/or concentrated fluid at the exit of the second separation unit.

6. Separating arrangement according to one of claims 1 to 5, **characterized in that** the first separation unit (36) is capable of separating matter from the fluid by osmosis, reverse osmosis, filtration, cyclone effect, or chromatography.

7. Use of the separating arrangement according to one of claims 1 to 6 for the desalination of sea-water.

8. Use of the separating arrangement according to one of claims 1 to 6 for the separation of contaminations like oil from water.

**Patentansprüche**

1. Trennanordnung mit einer Druckpumpe (1, 10, 12; 71) und mit Trenneinheiten zur Trennung eines Fluids von darin enthaltenen beigemischten Komponenten, wobei die Trenneinheiten für den Trennvorgang eine Druckdifferenz benötigen und dieser mit steigendem Druck des Fluids eine Leistungssteigerung aufweist, **dadurch gekennzeichnet, dass** ein Eingang (40) der Pumpe mit einer ersten Trenneinheit (36) verbunden ist, dass ein Ausgang (43) der Pumpe mit einer zweiten Trenneinheit (45) verbunden ist, um diese mit Fluid unter Druck zu versorgen, und dass

die erste Trenneinheit mit einem Auslass der zweiten Trenneinheit verbunden ist, der Fluid abgibt, welche mit der beigemischten Komponente angereichert ist, oder mit einem Ausgang der Pumpe, um der ersten Trenneinheit Fluid unter Druck mit der ursprünglichen oder einer erhöhten Komponentenkonzentration zuzuführen und damit das durch die erste Trenneinheit der Pumpe zugeleite Fluid bezüglich der beigemischten Komponenten zu verdünnen.

2. Trennanordnung nach Anspruch 1, **dadurch gekennzeichnet, dass** die Pumpe eine Fluidschleife mit einer Leitungsschleife (12), einer Zirkulationspumpe (10) und einer Doppelkonusvorrichtung (1) in schleifenförmiger Anordnung ist, wobei der Einlass der Pumpe aus der Einmündung (7) der Doppelkonusvorrichtung und der Ausgang (43) der Pumpe im wesentlichen aus einer von der Leitungsschleife abzweigenden Leitung besteht.

3. Trennanordnung nach Anspruch 2, **dadurch gekennzeichnet, dass** mit der Einmündung (7) der Doppelkonusvorrichtung eine Pumpe (40) verbunden ist, um die Fluidzufuhr zur Doppelkonusvorrichtung zu verbessern.

4. Trennanordnung nach einem der Ansprüche 1 bis 3, **dadurch gekennzeichnet, dass** die erste Trenneinheit (36) einen Massenaustausch zwischen zwei Fluiden gestattet, wobei die Trenneinheit mit einem Pumpenauslass (14, 15; 37, 43) und einem Einlass (40) der Pumpe (1, 10, 12; 71) verbunden ist, so dass ein Massenaustausch zwischen dem aus der Pumpe austretenden und dem durch die erste Trenneinheit (36) in sie eintretenden Fluid erfolgt, wodurch die Konzentration des von dem Fluid zu trennenden Stoffs im eintretenden Fluid vermindert wird.

5. Trennanordnung nach einem der Ansprüche 1 bis 4, **dadurch gekennzeichnet, dass** die zweite Trenneinheit (45) in der Lage ist, insbesondere durch Osmose, Umkehrosmose, Filtration, Zyklonwirkung oder Chromatographie, Stoffe von dem Fluid zu trennen, um gereinigtes Fluid und/oder konzentriertes Fluid am Ausgang der zweiten Trenneinheit zu gewinnen.

6. Trennanordnung nach einem der Ansprüche 1 bis 5, **dadurch gekennzeichnet, dass** die erste Trenneinheit (36) in der Lage ist, durch Osmose, Umkehrosmose, Filtration, Zyklonwirkung oder Chromatographie Stoffe von dem Fluid zu trennen.

7. Anwendung der Trennanordnung nach einem der Ansprüche 1 bis 6 zur Entsalzung von Meerwasser.

8. Anwendung der Trennanordnung nach einem der Ansprüche 1 bis 6 zur Trennung von Verschmutzungen wie Öl von Wasser.

**Revendications**

1. Agencement de séparation comprenant une pompe de pressurisation (1, 10, 12; 71) et des unités de séparation pour séparer un fluide de composants contenus en addition, les unités de séparation nécessitant une différence de pression pour le processus de séparation qui présente une performance améliorée lorsque la pression du fluide augmente, **caractérisé en ce**
qu'une entrée (40) de la pompe est reliée à une première unité de séparation (36),
qu'une sortie (43) de la pompe est reliée à une deuxième unité de séparation (45) afin de l'alimenter en fluide pressurisé, et
que la première unité de séparation est reliée à un débouché de la deuxième unité de séparation, ledit débouché fournissant du fluide enrichi en composant en addition, ou à une sortie de la pompe, afin d'alimenter la première unité de séparation du fluide pressurisé ayant la concentration originale de composants ou une concentration accrue et de diluer ainsi par rapport aux composants additionnels le fluide amené par la première unité de séparation à la pompe.

2. Agencement de séparation selon la revendication 1, **caractérisé en ce que** la pompe est une boucle fluidique comprenant une conduite en boucle (12), une pompe de circulation (10) et un dispositif à double cône (1) agencés en boucle, l'entrée de la pompe étant constituée par l'embouchure (7) du dispositif à double cône et la sortie (43) de la pompe étant essentiellement constituée par une conduite qui bifurque de la conduite en boucle.

3. Agencement de séparation selon la revendication 2, **caractérisé en ce qu'**une pompe (40) est connectée à l'embouchure (7) du dispositif à double cône afin d'améliorer l'alimentation de fluide au dispositif à double cône.

4. Agencement de séparation selon l'une des revendications 1 à 3, **caractérisé en ce que** la première unité de séparation (36) permet un échange de masse entre deux fluides, l'unité de séparation étant connectée à un débouché (14, 15; 37, 43) de la pompe et à une embouchure (40) de la pompe (1, 10, 12; 71) de telle manière qu'un échange de masse entre le fluide sortant de la pompe et le fluide entrant dans celle-ci par la première unité de séparation (36) a lieu, de sorte que la concentration de la matière qui est à séparer du fluide est réduite dans le fluide entrant.

5. Agencement de séparation selon l'une des revendications 1 à 4, **caractérisé en ce que** la deuxième unité de séparation (45) est capable de séparer de la matière du fluide, particulièrement par osmose, osmose inverse, filtration, effet de cyclone ou chromatographie, afin de recueillir du fluide purifié et/ou du fluide concentré à la sortie de la deuxième unité de séparation.

6. Agencement de séparation selon l'une des revendications 1 à 5, **caractérisé en ce que** la première unité de séparation (36) est capable de séparer de la matière du fluide par osmose, osmose inverse, filtration, effet de cyclone ou chromatographie.

7. Utilisation de l'agencement de séparation selon l'une des revendications 1 à 6 pour le dessalement de l'eau de mer.

8. Utilisation de l'agencement de séparation selon l'une des revendications 1 à 6 pour la séparation de l'eau de contaminations comme l'huile.

Fig.1

Fig. 2

Fig. 3

Fig. 4

Fig. 5

Fig. 6

Fig. 7

Fig. 8

Fig. 9